(19) Europäisches Patentamt
European Patent Office
Office européen des brevets

(11) **EP 1 798 559 A2**

(12) **EUROPÄISCHE PATENTANMELDUNG**

(43) Veröffentlichungstag:
 **20.06.2007 Patentblatt 2007/25**

(51) Int Cl.:
 *G01P 3/481* (2006.01)   *G01P 3/489* (2006.01)

(21) Anmeldenummer: **06124500.7**

(22) Anmeldetag: **21.11.2006**

(84) Benannte Vertragsstaaten:
 **AT BE BG CH CY CZ DE DK EE ES FI FR GB GR HU IE IS IT LI LT LU LV MC NL PL PT RO SE SI SK TR**
 Benannte Erstreckungsstaaten:
 **AL BA HR MK YU**

(30) Priorität: **14.12.2005  DE 102005059585**

(71) Anmelder: **ROBERT BOSCH GMBH**
 **70442 Stuttgart (DE)**

(72) Erfinder:
 • **Schanzenbach, Matthias**
  **74246, Eberstadt (DE)**
 • **Hachtel, Juergen**
  **74219, Moeckmuehl (DE)**

(54) **Verfahren und Vorrichtung zum Bestimmen der Drehzahl einer elektrischen Maschine**

(57)  Die Erfindung betrifft ein Verfahren zum Bestimmen der Drehzahl (w) einer elektrischen Maschine (1), insbesondere eines Gleichstrommotors, die im PWM-Betrieb angesteuert wird, wobei die Nachlaufspannung ($U_k$) der elektrischen Maschine (1) gemessen und daraus die Drehzahl (w) ermittelt wird. Die Drehzahlschwankung der elektrischen Maschine kann wesentlich reduziert werden, wenn die elektrische Maschine (1) mit einem Steuersignal (6') angesteuert wird, das eine PWM-Phase (PWM), in der die elektrische Maschine (1) mit einem vorgegebenen Tastverhältnis periodisch ein- und ausgeschaltet wird, und eine Messphase (M) aufweist, in der die elektrische Maschine (1) ausgeschaltet ist. Die Drehzahl (w) wird dabei in den Messphasen (M) gemessen und in den PWM-Phasen (PWM) modellbasiert berechnet.

**Fig. 1**

EP 1 798 559 A2

**Beschreibung**

Die Erfindung betrifft ein Verfahren zum Bestimmen der Drehzahl einer elektrischen Maschine, insbesondere eines Gleichstrommotors, gemäß dem Oberbegriff des Patentanspruchs 1, sowie eine entsprechende Vorrichtung gemäß dem Oberbegriff des Patentanspruchs 10.

Stand der Technik

Gleichstrommotoren, wie sie beispielsweise als Pumpenantrieb für Hydraulikpumpen in Kfz-Bremsanlagen eingesetzt werden, werden häufig in einem PWM-Betrieb (PWM: Pulsweitenmodulation) angesteuert, in dem der Gleichstrommotor mit einem vorgegebenen Tastverhältnis periodisch ein- und ausgeschaltet wird. Durch geeignete Wahl des Tastverhältnisses kann die Drehzahl des Motors nach Wunsch eingestellt bzw. geregelt werden. Das Tastverhältnis (definiert durch die Ein-Zeit/Periodendauer) bestimmt dabei die Drehzahl des Gleichstrommotors und kann grundsätzlich zwischen 0% (vollständig ausgeschaltet) und 100% (dauerhaft eingeschaltet) gewählt werden.

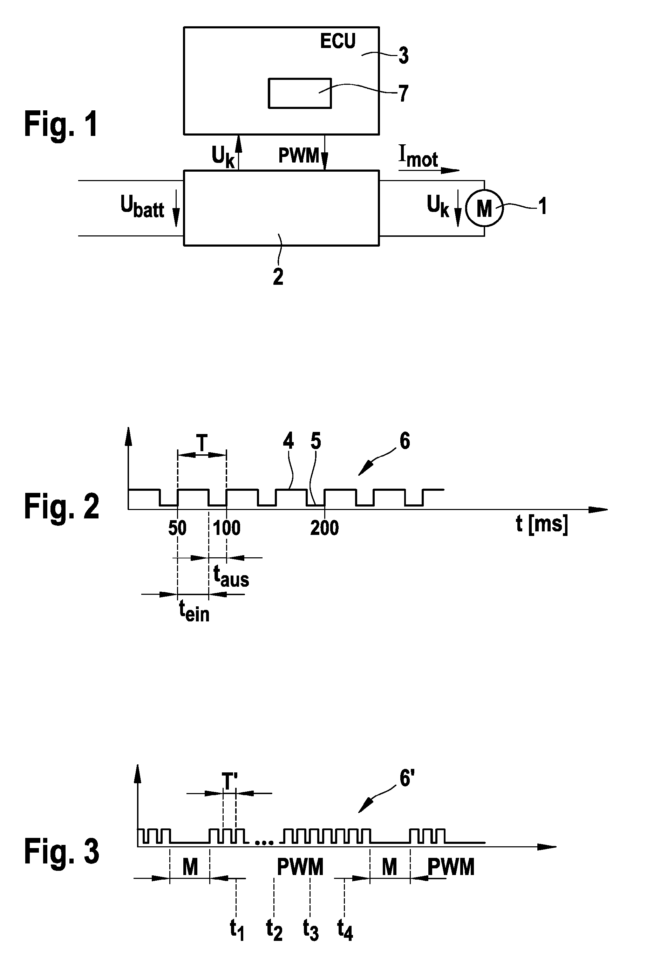

Fig. 1 zeigt eine typische Anordnung zur Drehzahlregelung eines Gleichstrommotors 1. Die Anordnung umfasst den zu regelnden Gleichstrommotor 1, eine daran angeschlossene Elektronik 2 mit einer Schalt-Endstufe und ein an der Elektronik 2 angeschlossenes Steuergerät 3. Die am Gleichstrommotor 1 anliegende Klemmenspannung ist mit $U_k$ und der durch den Motor fließende Strom mit $I_{mot}$ bezeichnet.

Das Steuergerät 3 umfasst einen Regel-Algorithmus 7, der abhängig von der Regelabweichung ein PWM-Signal 6 (siehe Fig. 2) erzeugt, mit dem die Schalt-Endstufe der Elektronik 2 periodisch ein- und ausgeschaltet wird. Der Regler 7 arbeitet üblicherweise mit einer Taktrate, die höher ist als die Taktrate des PWM-Signals 6.

Fig. 2 zeigt ein typisches PWM-Signal 6 zur Ansteuerung eines Gleichstrommotors 1. Während der Einschaltphasen 4 ist der Schalter der Schalt-Endstufe geschlossen und während der Ausschaltphasen 5 geöffnet. Dadurch wird der Gleichstrommotor 1 entsprechend dem Tastverhältnis periodisch mit einer Versorgungsspannung $U_{batt}$ verbunden bzw. von dieser getrennt. Die Dauer der einzelnen Phasen ist dabei mit $t_{ein}$ bzw. $t_{aus}$ bezeichnet. Das Tastverhältnis ergibt sich zu: $V = t_{ein} / T$.

Die aktuelle Ist-Drehzahl $\omega$ des Motors 1, die als Eingangsgröße in den Regelalgorithmus 7 einfließt, wird üblicherweise aus der so genannten Nachlaufspannung berechnet. Die Nachlaufspannung ist dabei eine generatorische Klemmenspannung $U_k$ des Gleichstrommotors 1, die in einer Ausschaltphase 5 des PWM-Signals gemessen wird. Für die Drehzahl $\omega$ gilt: $\omega = f(U_k)$. Die Bestimmung der Drehzahl aus der Nachlaufspannung eines Pumpenmotors ist beispielsweise aus der DE199.14.404 A1 bekannt.

Die aktuelle Drehzahl $\omega$ kann nur während der Ausschaltphasen 5 (indirekt), in denen der Motor 1 eine generatorische Spannung $U_k$ erzeugt, gemessen werden. Während der Einschaltphasen 4 ist dagegen keine Drehzahlmessung möglich. Da der Regelalgorithmus 7 i. d. R. mit einer höheren Taktrate arbeitet und auch während der Einschaltphasen 4 Drehzahlwerte benötigt, wird die Drehzahl in diesen Phasen 4 geschätzt. Hierzu wird in der Ausschaltphase 5 beispielsweise eine mittlere Drehzahl berechnet und diese Drehzahl auch in der Einschaltphase 4 als gültig angenommen. Bekannte Schätzverfahren sind jedoch relativ ungenau, da der Motor 1 während der Einschaltphasen 4 stark beschleunigt und während der Ausschaltphasen 5 durch die Last und mechanische Reibung abgebremst wird. Die Genauigkeit der Drehzahl-Regelung wird dadurch erheblich beeinträchtigt.

Ein weiteres Problem des herkömmlichen PWM-Betriebs ergibt sich aus den relativ niedrigen Frequenzen der verwendeten PWM-Signale von etwa 50 Hz. Wegen der langen Ein- und Ausschaltphasen 4,5 schwankt die Drehzahl $\omega$ des Elektromotors 1 relativ stark um den Sollwert. Gerade bei kleinen Tastverhältnissen von z.B. 20% sind die Drehzahlschwankungen wegen der kurzen Einschaltphasen 4 und der relativ langen Ausschaltphasen 5 sehr stark. Dies hat wiederum negative Auswirkungen auf Aggregate, die vom Gleichstrommotor 1 angetrieben werden.

Vorteile der Erfindung

Es ist daher die Aufgabe der vorliegenden Erfindung, die Genauigkeit der Drehzahlregelung eines Gleichstrommotors zu verbessern und dabei gleichzeitig die Drehzahlschwankungen zu reduzieren.

Gelöst wird diese Aufgabe gemäß der Erfindung durch die im Patentanspruch 1, sowie im Patentanspruch 10 angegebenen Merkmale. Weitere Ausgestaltungen der Erfindung sind Gegenstand von Unteransprüchen.

Ein wesentlicher Aspekt der Erfindung besteht darin, die elektrische Maschine anstatt mit einem kontinuierlichen PWM-Signal mit einem Steuersignal anzusteuern, das abwechselnd eine PWM-Phase und eine Messphase aufweist. In der PWM-Phase wird die elektrische Maschine mit einem vorgegebenen Tastverhältnis periodisch ein- und ausgeschaltet, und in der Mess-Phase dauerhaft ausgeschaltet. PWM-Phase und Mess-Phase wechseln sich dabei alternierend ab. Dies hat den wesentlichen Vorteil, dass die Taktrate der PWM-Phase so hoch gewählt werden kann, dass die elektrische Maschine nur sehr geringfügig um die Soll-Drehzahl schwankt. Die Taktrate der PWM-Phase liegt vorzugsweise im kHz-Bereich bzw. die Taktperiode im $\mu$s-Bereich. Diese hohe Taktrate bringt jedoch das Problem mit sich, dass während der Ausschaltzeiten des PWM-Signals keine Drehzahlmessung durchgeführt werden kann, weil die Dauer i. d. R. zu kurz für eine Messung ist. Daher wird in regelmäßigen Abständen die zuvor genannte Messphase zwischengeschaltet, in der die elektrische Maschine ausgeschaltet ist und eine Drehzahlmessung durchgeführt werden kann. Die Messphase ist dabei so gewählt, dass die Nachlaufspannung ein oder mehrere Male abgetastet werden kann.

Die Dauer der Messphase beträgt vorzugsweise mehrere ms. Die Dauer einer Taktperiode während der PWM-Phase liegt dagegen vorzugsweise im $\mu$s-Bereich.

Die Dauer der gesamten PWM-Phase ist insgesamt vorzugsweise wesentlich größer als die Dauer einer Messphase. Dieses Verhältnis beträgt vorzugsweise wenigstens 5:1, insbesondere etwa 10:1. Je höher das Verhältnis, umso mehr elektrische Energie kann zum Gleichstrommotor übertragen werden. Die Dauer der gesamten PWM-Phase beträgt vorzugsweise zwischen 10 und 100 ms, insbesondere etwa 50ms.

Da der Drehzahlregler während der PWM-Phase ständig neue Drehzahl-Istwerte benötigt, diese aber nicht gemessen werden können, wird vorgeschlagen, die Drehzahlwerte in der PWM-Phase anhand eines mathematischen Modells zu berechnen. Hierzu wird vorzugsweise eine Drehzahl-Änderung aus anderen Größen bestimmt und die aktuelle Drehzahl aus einem Anfangswert und der Drehzahl-Änderung abgeschätzt. Die Drehzahl-Änderung ist vorzugsweise eine Funktion der Versorgungsspannung ($U_{batt}$) und der am Motor wirkenden Last.

Die Drehzahl-Änderung wird vorzugsweise anhand folgender Gleichung berechnet:

$$\dot{\omega} = \frac{1}{J}\left(\frac{k}{R} \cdot U_k - (M_{reib} + M_{last}) - \frac{k^2}{R} \cdot \omega\right)$$

Die Spannung $U_k$ ist hierbei $U_k = PWM \cdot U_{batt}$. Das Lastmoment $M_{last}$ kann beispielsweise aus verschiedenen anderen Sensorgrößen ermittelt werden. Das Reibmoment $M_{reib}$ ist bekannt, ebenso wie die Motorkonstante k, der ohmsche Widerstand R und das Massenträgheitsmoment J.

Die Berechnung der aktuellen Drehzahl wird vorzugsweise in einem Steuergerät durchgeführt, das einen entsprechenden Algorithmus umfasst. Der Drehzahlregler berechnet dann aus den Schätzwerten jeweils ein neues Tastverhältnis.

Die Erfindung wird im Folgenden anhand der beigefügten Zeichnungen beispielhaft näher erläutert. Es zeigen:

Fig. 1 eine schematische Darstellung eines Gleichstrommotors mit Drehzahlregelung;

Fig. 2 ein typisches PWM-Signal gemäß dem Stand der Technik;

Fig. 3 ein modifiziertes PWM-Signal gemäß einer Ausführungsform der Erfindung;

Fig. 4 den Verlauf einer geschätzten und einer gemessenen Drehzahl über der Zeit; und

Fig. 5 ein einfaches Ersatzschaltbild eines Elektromotors.

Bezüglich der Erläuterung der Fig. 1 und 2 wird auf die Beschreibungseinleitung verwiesen.

Fig. 3 zeigt ein modifiziertes PWM-Signal 6', mit dem der Gleichstrommotor 1 bzw. die zugehörige Schalt-Endstufe 2 von Fig. 1 angesteuert wird.

Das modifizierte PWM-Signal 6' umfasst eine PWM-Phase PWM, in der der Gleichstrommotor 1 mit einem vorgegebenen Tastverhältnis periodisch ein- und ausgeschaltet wird, und eine Mess-Phase M, in der der Gleichstrommotor 1 ausgeschaltet bzw. in den generatorischen Betrieb geschaltet ist. Die PWM-Phasen PWM und Mess-Phasen M wechseln sich dabei alternierend ab.

Während der Messphase M wird die Drehzahl (bzw. elektrische Kreisfrequenz) des Gleichstrommotors 1 indirekt über die generatorische Klemmenspannung $U_k$ gemessen. Hierzu ist ein entsprechender Spannungssensor (in Block 2) vorgesehen. In den PWM-Phasen PWM wird die Drehzahl $\omega$ modellbasiert berechnet und dem Regler 7 als Eingangsgröße zugeführt. (Die Berechnung der aktuellen Drehzahl kann dabei von der Elektronik 2 oder dem Steuergerät 3 durchgeführt werden.)

Die Taktrate während der PWM-Phase PWM kann beispielsweise zwischen 20 kHz und 100 kHz betragen und ist damit etwa 1000 mal höher als bei dem Signal von Fig. 2. Die gesamte Dauer der PWM-Phase PWM beträgt beispielsweise zwischen 10 ms und 50 ms. Die Messphase M dauert dagegen nur wenige ms, wie z.B. 2 oder 3 ms. Die Gesamtdauer der PWM-Phase PWM ist dabei etwa 10-mal länger als die Dauer der Messphase M. Somit kann eine ausreichende Menge elektrischer Energie zum Gleichstrommotor 1 transportiert werden.

Die Berechnung der Drehzahl wird periodisch (z. B. alle 5 ms) zu den Zeitpunkten t1-t4 durchgeführt. Der Regelalgorithmus 7 bestimmt dann aus den Schätzwerten jeweils ein neues Tastverhältnis für das PWM-Signal.

Die aktuelle Drehzahl $\omega$ wird hier aus einem Anfangswert $\omega_0$ und der Drehzahl-Änderung abgeschätzt. Für die Drehzahl-Änderung $\dot{\omega}$ gilt:

$$\dot{\omega} = \frac{1}{J}\left(\frac{k}{R} \cdot U_k - (M_{reib} + M_{last}) - \frac{k^2}{R} \cdot \omega\right)$$

Für endliche Zeitintervalle $\Delta t$ ergibt sich folgende Differenzen-Gleichung:

$$\frac{\Delta\omega}{\Delta t} = \frac{\omega_i - \omega_{i-1}}{\Delta t}$$

Die geschätzte aktuelle Drehzahl $\omega_i$ ergibt sich damit rekursiv zu:

$$\omega_i = \omega_{i-1} + \Delta\omega, \qquad \text{mit} \quad \Delta\omega = \frac{1}{J}\left(\frac{k}{R} \cdot U_k - (M_{reib} + M_{last}) - \frac{k^2}{R} \cdot \omega_{i-1}\right)\Delta t$$

Dabei ist $\omega_{i-1}$ ein Anfangswert und $\Delta\omega$ die Änderung der Drehzahl während eines darauf folgenden Reglerzyklus $[t_{i-1}, t_i]$.

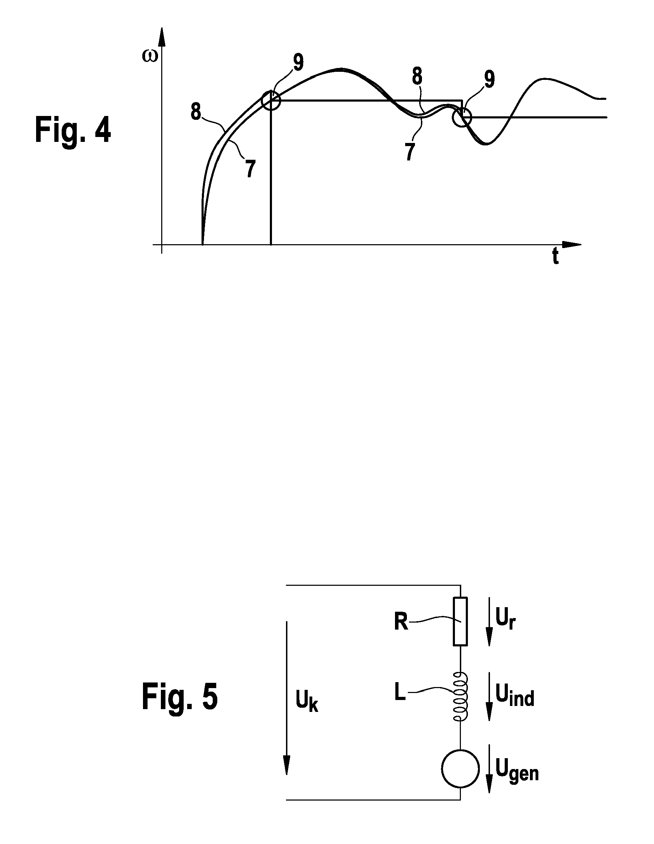

Fig. 4 zeigt die gemessene 7 und die geschätzte Drehzahl 8 über der Zeit. Wie zu erkennen ist, stimmt die Schätzung sehr gut mit der tatsächlichen Drehzahl 7 überein. Zu den Messpunkten 9 wird die geschätzte Drehzahl 8 durch die gemessene Drehzahl 7 ersetzt und in der nachfolgenden PWM-Phase PWM die Berechnung der Drehzahl neu initialisiert. D.h. in der nächsten PWM-Phase startet die Berechnung ausgehend von dem zuletzt gemessenen Drehzahlwert $\omega$.

Die vorstehend genannte Gleichung für die Drehzahl-Änderung $\dot{\omega}$ kann unter Berücksichtigung des Ersatzschaltbildes von Fig. 5 in einfacher Weise hergeleitet werden. In Fig. 5 kennzeichnet $U_r$ die am Ankerwiderstand R abfallende Spannung, wobei $U_r = I \cdot R$ ist. $U_{ind}$ kennzeichnet die an der Ankerinduktivität L induzierte Spannung, wobei $U_{ind} = L \cdot di/dt$ ist. $U_{gen}$ ist die generatorische Spannung, die von der Motorkonstante k und der Kreisfrequenz des Motors $\omega$ abhängig ist. Dabei gilt: $U_{gen} = k \cdot \omega$.

Für die Klemmenspannung $U_k$ der elektrischen Maschine gilt:

$$U_k = R \cdot I + L \cdot \frac{di}{dt} + k \cdot \omega \tag{1}$$

Die mechanische Momentenbilanz ist:

$$J \cdot \frac{d\omega}{dt} = k \cdot I - M_{reib} - M_{last} \tag{2}$$

Dabei ist $M_{reib}$ das Reibmoment, $M_{last}$ das Lastmoment, J das Massenträgheitsmoment. Durch Erweitern von Gleichung 1 mit $\dfrac{k}{R}$ ergibt sich:

$$\frac{k}{R} \cdot U_k = k \cdot I + M_{last} + L \cdot \frac{k}{R} \cdot \frac{di}{dt} + \frac{k^2}{R} \cdot \omega \qquad (3)$$

Aus Gleichung (2) und (3) ergibt sich:

$$J \cdot \dot{\omega} + \frac{k^2}{R} \cdot \omega = \frac{k}{R} \cdot U_k - (M_{reib} + M_{last}) \qquad (4)$$

Durch Umstellung von Gleichung (4) ergibt sich:

$$\dot{\omega} = \frac{1}{J}(\frac{k}{R} \cdot U_k - (M_{reib} + M_{last}) - \frac{k^2}{R} \cdot \omega) \qquad (5)$$

**Patentansprüche**

1. Verfahren zum Bestimmen der Drehzahl (w) einer elektrischen Maschine (1), insbesondere eines Gleichstrommotors, die im PWM-Betrieb angesteuert wird, wobei die Drehzahl (w) aus einer Nachlaufspannung ($U_k$), die in einer Ausschaltphase (5) gemessen wird, ermittelt wird, **dadurch gekennzeichnet, dass** die elektrische Maschine (1) mit einem Steuersignal (6') angesteuert wird, das eine PWM-Phase (PWM), in der die elektrische Maschine (1) mit einem vorgegebenen Tastverhältnis periodisch ein- und ausgeschaltet wird, und eine Messphase (M) aufweist, in der die elektrische Maschine (1) ausgeschaltet ist und die Nachlaufspannung ($U_k$) gemessen wird.

2. Verfahren nach Anspruch 1, **dadurch gekennzeichnet, dass** die Dauer der Messphase (M) größer ist als eine Taktperiode (T') des Steuersignals (6') in der PWM-Phase (PWM) ist.

3. Verfahren nach einem der Ansprüche 1 oder 2, **dadurch gekennzeichnet, dass** die Dauer der Messphase (M) in ms-Bereich liegt.

4. Verfahren nach einem der vorhergehenden Ansprüche, **dadurch gekennzeichnet, dass** die Dauer einer Taktperiode (T') des Steuersignals (6') in der PWM-Phase (PWM) im μs-Bereich liegt.

5. Verfahren nach Anspruch 3, **dadurch gekennzeichnet, dass** die Dauer der Messphase (M) zwischen 1 ms und 5 ms beträgt.

6. Verfahren nach einem der vorhergehenden Ansprüche, **dadurch gekennzeichnet, dass** die Dauer der PWM-Phase (PWM) zwischen 10 ms und 100 ms beträgt.

7. Verfahren nach einem der vorhergehenden Ansprüche, **dadurch gekennzeichnet, dass** die Dauer der PWM-Phase (PWM) wesentlich größer ist als die Dauer der Messphase (M).

8. Verfahren nach einem der vorhergehenden Ansprüche, **dadurch gekennzeichnet, dass** die Drehzahl ($\omega$) in der PWM-Phase (PWM) anhand eines mathematischen Models abgeschätzt wird.

9. Verfahren nach Anspruch 8, **dadurch gekennzeichnet, dass** die Drehzahl ($\omega$) in der PWM-Phase (PWM) anhand einer rekursiven Funktion

$$\omega_i = \omega_{i-1} + \Delta\omega, \quad \text{mit } \Delta\omega = f(U_k, \omega_{i-1})$$

ermittelt wird.

10. Vorrichtung zum Bestimmen der Drehzahl ($\omega$) einer elektrischen Maschine (1), insbesondere eines Gleichstrommotors, die im PWM-Betrieb angesteuert wird, umfassend einen Spannungssensor (2) zum Messen einer Nachlaufspannung ($U_k$) und eine Elektronik (2,3) zum Bestimmen der Drehzahl ($\omega$) aus der gemessenen Nachlaufspannung ($U_k$), **dadurch gekennzeichnet, dass** die elektrische Maschine (1) mit einem Steuersignal (6) angesteuert wird, das eine PWM-Phase (PWM), in der die elektrische Maschine (1) mit einem vorgegebenen Tastverhältnis periodisch ein- und ausgeschaltet wird, und eine Messphase (M) aufweist, in der die elektrische Maschine (1) in den generatorischen Betrieb geschaltet ist und die Nachlaufspannung ($U_k$) gemessen wird.

## Fig. 1

## Fig. 2

## Fig. 3

7

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19914404 A1